# EUROPEAN PATENT APPLICATION

(11) **EP 1 927 294 A2**
(43) Date of publication of application: **04.06.2008**
(21) Application number: 07123110.4
(22) Date of filing: 16.02.2006
(51) Int. Cl.: A42B 3/06

(54) **Energy-absorbing liners and shape conforming layers for use with protective headgear**

(62) Divisional of application: 06720890.0
(71) Applicant: Ferrara, Vincent R., Wellesley MA 02481 (US)
(72) Inventor: Ferrara, Vincent R., Wellesley MA 02481 (US)
(74) Representative: Rupprecht, Kay

(57) **Abstract**

A multilayer shell for use in the construction of protective headgear, the shell including an outer layer, an inner layer, a middle layer disposed between the outer and inner layer which resiliently compresses in response to an impact to the outer layer, and an internal liner disposed inwardly of the inner layer. The middle layer includes a plurality of compressible members, which resiliently compress to absorb the energy of a direct impact to the outer layer and resiliently shear with respect to the inner layer in response to a tangential impact to the outer layer. The inner layer includes an open configuration, which reduces the weight of the shell, provides for greater heat ventilation from the head of the user, and permits for visualization of the compressible elements. The internal liner is formed from contourable materials which enhance user fit and comfort without compromising user safety.

## Description

### CROSS-REFERENCE TO RELATED APPLICATIONS

This application is a continuation-in-part application claiming priority to co- pending United States Patent Application Serial No. 11/059,427, filed February 16, 2005, titled "Multi-Layer Air-Cushion Shell With Energy-Absorbing Layer For Use in the Construction of Protective Headgear." The entirety of this co-pending patent application is incorporated by reference herein.

### BACKGROUND OF THE INVENTION

### Field of the Invention

The present invention relates generally to protective headgear. More specifically, the invention relates to a layered construction of protective headgear including an inner layer having an open configuration which reduces the weight of the layer and allows for greater ventilation off the head and an internal liner formed of head contouring materials that improve the fit and comfort of the headgear and further reduce the risk of and protect an individual's head from injury.

### Background Information

Concussions, also called mild traumatic brain injury, are a common, serious problem in sports known to have detrimental effects on people in the short and long term. With respect to athletes, a concussion is a temporary and reversible neurological impairment, with or without loss of consciousness. Another definition for a concussion is a traumatically induced alteration of brain function manifested by 1) an alteration of awareness or consciousness, and 2) signs and symptoms commonly associated with post-concussion syndrome, such as persistent headaches, loss of balance, and memory disturbances, to list but a few. Some athletes have had their careers abbreviated because of concussions, in particular because those who have sustained multiple concussions show a greater proclivity to further concussions and increasingly severe symptoms. Although concussions are prevalent among athletes, the study of concussions is difficult, treatment options are virtually non-existent, and "return-to- play" guidelines are speculative. Accordingly, the best current solution to concussions is prevention and minimization.

Concussion results from a force being applied to the brain, usually the result of a direct blow to the head, which results in shearing force to the brain tissue, and a subsequent deleterious neurometabolic and neurophysiologic cascade. There are two primary types of forces experienced by the brain in an impact to the head, linear acceleration and rotational acceleration. Both types of acceleration are believed to be important in causing concussions. Decreasing the magnitude of acceleration thus decreases the force applied to the brain, and consequently reduces the risk or severity of a concussion.

Protective headgear is well known to help protect wearers from head injury by decreasing the magnitude of acceleration (or deceleration) experienced by their wearers. Currently marketed helmets, primarily address linear forces, but generally do not diminish the rotational forces experienced by the brain. Helmets fall generally into two categories: single impact helmets and multiple-impact helmets. Single-impact helmets undergo permanent deformation under impact, whereas multiple-impact helmets are capable of sustaining multiple blows. Applications of single-impact helmets include, for example, bicycling and motorcycling. Participants of contact sports, such as hockey and football, use multiple-impact helmets. Both categories of helmets have similar construction. A semi-rigid outer shell distributes the force of impact over a wide area and a crushable inner layer reduces the force upon the wearer's head.

The inner layer of single-impact helmets are typically constructed of fused expanded polystyrene (EPS), a polymer impregnated with a foaming agent. EPS reduces the amount of energy that reaches the head by permanently deforming under the force of impact. To be effective against the impact, the inner layer must be sufficiently thick not to crush entirely throughout its thickness. A thick inner layer, however, requires a corresponding increase in the size of the outer shell, which increases the size and bulkiness of the helmet.

Inner layers designed for multiple-impact helmets absorb energy through elastic and viscoelastic deformation. To absorb multiple successive hits, these helmets need to rebound quickly to return to their original shape. Materials that rebound too quickly, however, permit some of the kinetic energy of the impact to transfer to the wearer's head. Examples of materials with positive rebound properties, also called elastic memory, include foamed polyurethane, expanded polypropylene, expanded polyethylene, and foamed vinylnitrile. Although some of these materials have desirable rebound qualities, an inner layer constructed therefrom must be sufficiently thick to prevent forceful impacts from penetrating its entire thickness. The drawback of a thick layer, as noted above, is the resulting bulkiness of the helmet. Moreover, the energy absorbing properties of such materials tend to diminish with increasing temperatures, whereas the positive rebound properties diminish with decreasing temperatures. There remains a need, therefore, for an improved helmet construction that can reduce the risk and severity of concussions without the aforementioned disadvantages of current helmet designs.

### SUMMARY OF THE INVENTION

In one aspect, the invention features protective headgear comprising an outer layer having an internally facing surface, an inner layer having a surface that faces the outer layer, and a middle layer having a plurality of compressible members disposed in a fluid-containing interstitial region bounded by the inner and outer layers. Each compressible member is attached to the surface of the inner layer and to the internally facing surface of the outer layer. The protective headgear of this embodiment also includes at least one passageway by which fluid can leave the middle layer when the protective headgear experiences an impact.

Corresponding with this invention there is provided a method for making protective headgear comprising forming a multi-layered shell by forming a plurality of individually compressible members, providing an outer layer and a inner layer, and producing a composite structure with the individually compressible members being disposed in an interstitial region bounded by the outer and inner layers, each compressible member being attached to an internally facing surface of the outer layer, and to a surface of the inner layer facing the outer layer.

In another aspect, the invention features protective headgear comprising an outer layer having an internally facing surface, an inner layer having a surface that faces the outer layer, and a middle layer having a plurality of compressible members disposed in a fluid-containing interstitial region bounded by the inner and outer layers, and an internal liner layer disposed inwardly of the inner layer. The inner layer has an open configuration or a non-continuous form. The internal liner layer is formed of contouring materials which enhance user fit and comfort without compromising user safety.

### BRIEF DESCRIPTION OF THE DRAWINGS

The above and further advantages of this invention may be better understood by referring to the following description in conjunction with the accompanying drawings, in which like numerals indicate like structural elements and features in various figures. The drawings are not necessarily to scale, emphasis instead being placed upon illustrating the principles of the invention.
FIG. 1 is a side view of one embodiment of a protective headgear constructed in accordance with the present invention.
FIG. 2 is a cross-sectional view of the protective headgear of FIG. 1 having a hard inner layer disposed between a compressible internal layer and a middle layer, FIG. 3 is a side view of another embodiment of the protective headgear the present invention.
FIG. 4 is a cross-sectional view of still another embodiment of a layered construction for protective headgear embodying the invention, the embodiment having a multilayer shell with a plurality of compressible members disposed between an outer surface and an inner surface.
FIG. 5 is a diagram illustrating a method for forming a multi-layer shell for use, for example, in constructing protective headgear.
FIG. 6 is a diagram illustrating an embodiment of a method for adding an internal layer to the multilayer shell of FIG. 5. FIG. 7A is a diagram illustrating the operation of protective headgear of the present invention during a direct impact.
FIG. 7B is a diagram illustrating the operation of protective headgear of the present invention during a tangential impact.
FIG. 8A is a diagram of one embodiment of a compressible member having a hollow chamber for holding a volume of fluid.
FIG. 8B is a diagram of a sequence illustrating simulated effects of a high- energy impact to the compressible member of FIG. 8A. FIG. 8C and 8D are diagrams illustrating the stretching and bending capabilities of the compressible member of FIG. 8 A.
FIG. 8E is a diagram of the compressible member of FIG. 8 A when compressed. FIG. 9A is a diagram of another embodiment of a compressible member with a hollow chamber for holding a volume of fluid.
FIG. 9B is cross-sectional view of an embodiment of a shell having openings formed in the outer and inner layers thereof for the passage of fluid.
FIG. 10A is a cross-sectional view of an embodiment of a shell having an outer shell, an inner layer, and a plurality of compressible members disposed therebetween.
FIG. 10B is a diagram illustrating the shell of FIG. 10A on a wearer's head.
FIG. 10C is a diagram illustrating the operation of protective headgear of FIG. 10A during a direct impact.
FIG. 10D is a diagram illustrating the operation of protective headgear of FIG. 10A during a tangential impact.
FIG. 11A is a rear view of an embodiment of protective headgear employing compressible members of FIG. 9 A.
FIG. 11B is a cross-sectional view of an embodiment of a shell having an outer shell, an inner layer, and a plurality of compressible members disposed therebetween.
FIG. 12 illustrates one embodiment of the inner shell layer of the present invention.
FIG. 13 illustrates another embodiment of the inner shell layer of the present invention.
FIG. 14 illustrates a third embodiment of the inner shell layer of the present invention.
FIG. 15 illustrates a fourth embodiment of the inner shell layer of the present invention.

### DETAILED DESCRIPTION OF AN ILLUSTRATIVE EMBODIMENT

The present invention relates to protective headgear designed to lessen the amount of force that reaches the brain of the wearer from an impact to the head. The headgear includes a shell with a multilayer construction for cushioning the impact, thus slowing the change in velocity of the wearer's head, producing a corresponding decrease in the magnitude of acceleration or deceleration experienced by the wearer, and reducing the risk or severity of concussion. As described further below, the protective head gear may include an outer layer, an energy-absorbing middle layer, and an inner layer, with one or more of these layers being constructed of an energy- absorbing compressible material, and an inner liner layer formed of a contourable material which contours to the shape of an individual's head. In a preferred embodiment, the contourable material is a use-dependent contour form. In another preferred embodiment, the contourable material is a pressure equalizing contouring fluid. Still other embodiments may include combinations of these compressible and contourable materials.

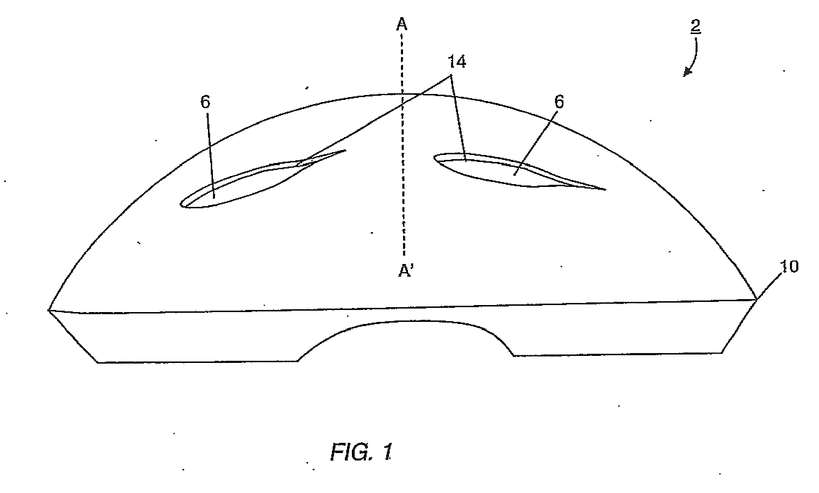

Various embodiments of the energy-absorbing layer of the shell function to provide an air cushion during an impact to the headgear. In a preferred embodiment, an impact causes air to be expelled from the energy-absorbing layer. Protective head- gear of the invention can responds to an impact by moving in any one or combination of ways, including (1) globally compressing over a broad area of the shell, (2) locally compressing at the point of impact, (3) flexing by the outer layer of the shell, and (4) rotating by the outer layer and the energy-absorbing layer with respect to the inner layer. The multi-layer constructions of the present invention can be adapted for use in a variety of types of protective headgear including, but not limited to, safety helmets, motorcycle helmets, bicycle helmets, ski helmets, lacrosse helmets, hockey helmets, and football helmets, batting helmets for baseball and softball, headgear for rock and mountain climbers, and headgear for boxers. Other applications can include helmets used on construction sites, in defense and military applications, and for underground activities. Although the following descriptions focus primarily on protective headgear, it is to be understood that the layered construction of the systems of the present invention apply to other types of equipment used for sports activities or for other applications, e.g., face masks, elbow pads, shoulder pads, and shin pads. FIG. 1 shows a side view of one embodiment of a protective headgear 2 constructed in accordance with the present invention. Here, the protective headgear 2 is a helmet that has an aerodynamic shape designed for use by bicyclists. This shape is merely exemplary; it is to be understood that the helmet shape can vary, depending upon the particular sporting event or activity for which the helmet is designed. Further, the protective headgear of the present invention can be constructed with various additional features, such as a cage for a hockey helmet, a face mask for a football helmet, a visor for a motorcycle helmet, retention straps, chin straps, and the like.

The protective headgear, or helmet 2, of FIG. 1 includes ventilation openings 6 near the top to permit air to flow for cooling the wearer's head. Here, the ventilation openings 6 are teardrop shaped, each pointing toward the rear 10 of the helmet 2 to give a visual sensation of speed. For clarity sake, the various layers of the materials used in the construction of the helmet 2 appear in the openings 6 as a single layer 14. Ventilation openings can also be on the other side of the helmet 2 (not shown) if the helmet has a symmetric design. Such openings 6 are exemplary, and can have various other shapes or be omitted altogether, depending upon the type of helmet. As will be recognized by those skilled in the art, protective headgear constructed in accordance with the invention may also include other types of openings, such as ear holes.

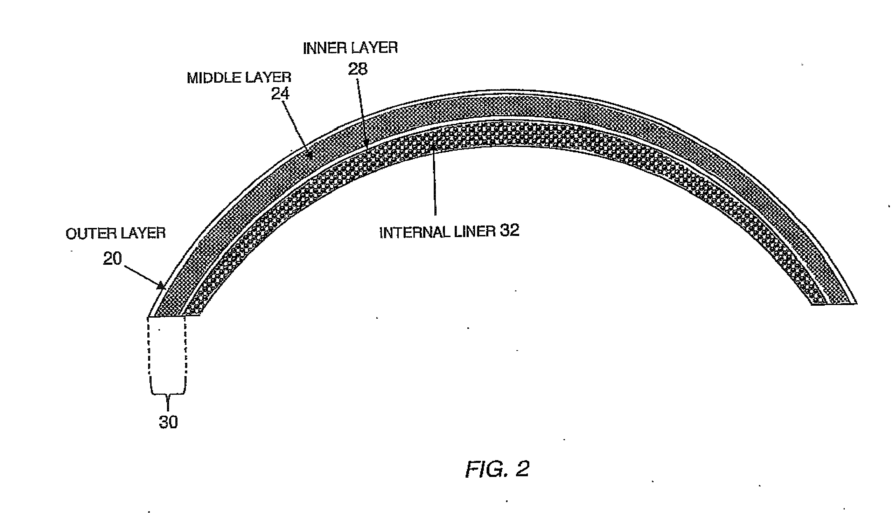

FIG. 2 shows a cross section of the helmet 2 along the line A-A' in FIG. 1. In the embodiment shown, the helmet 2 includes an outer shell layer 20, a compressible middle layer 24, a hard inner shell layer 28, and a compressible internal liner 32. The outer shell layer 20, middle layer 24, and inner shell layer 28 together provide an impact-absorbing shell 30. As used herein, a layer is compressible based on the relative ease with which that layer decreases in thickness in response to an applied force. In general, compressible layers are more apt to decrease in thickness in response to an applied force than hard layers. The compressible layers 24, 32 can compress discernibly in response to an applied force. In contrast, no readily discernible compression, as defined by a readily discernible decrease in thickness, occurs if a comparable force is applied directly to the inner shell layer 28, although that layer may temporarily deform by bending. Numerical hardness values, determined according to any one of a variety of hardness tests, such as a Shore (Durometer) Test, can be used to measure the relative hardness of each layer. In general, compressible layers measure softer than hard layers.

As described in detail below, each of the layers can be constructed of a lightweight material, thus contributing towards the construction of a lightweight helmet. Although not drawn to scale, FIG.2 shows one example of the relative thicknesses of the various layers and coating. These relative thicknesses can also depart from those shown in FIG. 2 without departing from the principles of the invention. For example, a bike helmet could be made with a thick inner shell layer 28 (e.g., of expanded polystyrene) and with a middle layer 24 of TPE that is thinner than the inner shell layer 28. Also, additional layers can be disposed between the middle layer 24 and the inner shell layer 28, or between the internal liner 32 and the inner shell layer 28, without departing from the principles of the invention.

The outer shell layer 20 covers the middle layer 24 and serves various functions. For example, the outer shell layer 20 can provide durability by protecting the helmet 2 from punctures and scratches. Other functions include presenting a smooth surface for deflecting tangential impacts, waterproofing, and displaying cosmetic features such as coloring and identifying the product brand name. In a preferred embodiment, this outer shell layer 20 is made of a TPE material.

Beneath the outer shell layer 20, the compressible middle layer 24 covers an outer surface of the inner shell layer 28. The middle layer 24 attaches to the inner shell layer 28. A primary function of the middle layer 24 is impact energy absorption. Preferably, the middle layer 24 is constructed of a thermoplastic elastomer material.

Thermoplastic elastomers or TPEs are polymer blends or compounds, which exhibit thermoplastic characteristics that enable shaping into a fabricated article when heated above their melting temperature, and which possess elastomeric properties when cooled to their designed temperature range. Accordingly, TPEs combine the beneficial properties of plastic and rubber, that is, TPEs are moldable and shapeable into a desired shape when heated and are compressible and stretchable when cooled. In contrast, neither thermoplastics nor conventional rubber alone exhibits this combination of properties.

To achieve satisfactory purposes, conventional rubbers must be chemically crosslinked, a process often referred to as vulcanization. This process is slow, irreversible, and results in the individual polymer chain being linked together by covalent bonds that remain effective at normal processing temperatures. As a result, vulcanized rubbers do not become fluid when heated to these normal processing temperatures (i.e., the rubber cannot be melted). When heated well above normal processing temperatures, vulcanized rubbers eventually decompose, resulting in the loss of substantially all useful properties. Thus, conventional vulcanized rubbers cannot be formed into useful objects by processes that involve the shaping of a molten material. Such processes include injection molding, blow molding and extrusion, and are extensively used to produce useful articles from thermoplastics. Thermoplastics are generally not elastic when cooled and conventional rubbers are not moldable using manufacturing processes and equipment currently used for working with thermoplastics, such as injection molding and extrusion. These processes, however, are applicable for working with TPEs.

Most TPEs have a common feature: they are phase-separated systems. At least one phase is hard and solid at room temperature and another phase is elastomeric and fluid. Often the phases are chemically bonded by block or graft polymerization. In other cases, a fine dispersion of the phases is apparently sufficient. The hard phase gives the TPEs their strength. Without the hard phase, the elastomer phase would be free to flow under stress, and the polymers would be unusable. When the hard phase is melted, or dissolved in a solvent, flow can occur and therefore the TPE can be processed. On cooling, or upon evaporation of the solvent, the hard phase solidifies and the TPEs regain their strength. Thus, in one sense, the hard phase of a TPE behaves similarly to the chemical crosslinks in conventional vulcanized rubbers, and the process by which the hard phase does so is often called physical crosslinking. At the same time, the elastomer phase gives elasticity and flexibility to the TPE.

Examples of TPEs include block copolymers containing elastomeric blocks chemically linked to hard thermoplastic blocks, and blends of these block copolymers with other materials. Suitable hard thermoplastic blocks include polystyrene blocks, polyurethane blocks, and polyester blocks. Other examples of TPEs include blends of a hard thermoplastic with a vulcanized elastomer, in which the vulcanized elastomer is present as a dispersion of small particles. These latter blends are known as thermoplastic vulcanizates or dynamic vulcanizates.

TPEs can also be manufactured with a variety of hardness values, e.g., a soft gel or a hard 90 Shore A or greater. One characteristic of the TPE material is its ability to return to its original shape after the force against the helmet 2 is removed (i.e., TPE material is said to have memory). Other characteristics of TPE include its resistance to tear, its receptiveness to coloring, and its rebound resilience elasticity. Re-bound resilience elasticity is the ratio of regained energy in relation to the applied energy, and is expressed as a percentage ranging from 0% to 100%. A perfect energy absorber has a percentage of 0%; a perfectly elastic material has a percentage of 100%. In general, a material with low rebound resilience elasticity absorbs most of the applied energy from an impacting object and retransmits little or none of that energy. To illustrate, a steel ball that falls upon material with low rebound resilience elasticity experiences little or no bounce; the material absorbs the energy of the falling ball. In contrast, the ball bounces substantially if it falls upon material with high rebound resilience elasticity.

Another advantage of these TPEs is that their favorable characteristic may exist over a wide range of temperatures. Preferably, the TPE material of the middle layer 24 has a glass-transition temperature of less than -20 degrees Fahrenheit. The glass-transition temperature is the temperature below which the material loses its soft and rubbery qualities. A TPE material with an appropriate glass-transition temperature can be selected for the middle layer 24 depending on the particular application of the helmet 2 (e.g., a glass-transition temperature of 0 degrees Fahrenheit may be sufficient for baseball helmets, whereas a glass transition temperature of -40 degrees Fahrenheit may be needed for football and hockey helmets).

TPEs can also be formed into a variety of structures. In one embodiment, the middle layer 24 is processed into individual members, such as cylindrical columns, or other shapes such as pyramids, spheres, or cubes, allowing for independent movement of each member structure, and for the free flow of air around the members during an impact. Preferably, the individual members each have an air-filled chamber, as described in more detail below. In another embodiment, the layer has a honeycomb structure (i.e., waffle-type). The interconnected hexagonal cells of a honeycombed structure provide impact absorption and a high strength-to-weight ratio, which permits construction of a lightweight helmet. The interconnected cells absorb and distribute the energy of an impact evenly throughout the structure. The honeycomb structure also reduces material costs because much of the material volume is made of open cells. This structure can be any one in which the material is formed into interconnected walls and open cells. The cells can have a shape other than hexagonal, for example, square, rectangular, triangular, and circular, without departing from the principles of the invention.

The formation of the middle layer 24 on the inner shell layer 28 can be accomplished using an extrusion, blow molding, casting, or injection molding process. The compressible middle layer 24 and inner shell layer 28 can be manufactured separately and adhered together after production, or they may be manufactured as one component, with the two layers being adhered to each other during manufacturing. TPEs bond readily to various types of substrates, such as plastic, and, thus, TPEs and substrates are commonly manufactured together. With respect to solid and foam forms of TPE structures, the softness (or conversely, the hardness) of the middle layer 24 can also be determined over a range of durometers. Preferably, the hardness range for these forms is between 5 and 90 on the Shore A scale, inclusive. The thickness of the middle layer 24 can be varied without departing from the principles of the invention. In one embodiment, the middle layer 24 is approximately 1 /4 to one inch thick.

The inner shell layer 28 is constructed of a hardened material, such as a rigid thermoplastic, a thermoplastic alloy, expanded polystyrene, or a fiber-reinforced material such as fiberglass, TWINTEX®, KEVLAR®, or BP Curv^{™}. The inner shell layer 28 operates to provide structure to the helmet 2, penetration resistance, and impact energy distribution to the internal liner layer 32. In one embodiment, the thickness of the inner shell layer 28 is 1/16^{th} of an inch. The thickness of the inner shell layer 28 can be varied without departing from the principles of the invention.

The inner shell layer 28 may be constructed of a single piece of material. Alternatively, it may be non-continuous in form such that the layer 28 includes lines, bands or arcs of material which meet at vertices and are interrupted by open spaces in a patterned form. As described in further detail below, examples of the non- continuous shapes that the inner shell layer 28 may take include, but are not limited to, a buckeyball shape, a grid shape, a geodesic dome and a honeycomb. Among the benefits of non-continuous forms of the inner shell layer are that the weight of the shell is reduced, heat is more easily ventilated from the user's head through the open spaces defined by the openings, and visualization and manual contact with the compressible elements is permitted.

Providing another impact energy-absorbing layer, the internal liner layer 32 contacts the wearer's head. Other functions of the internal liner 32 may include sizing, resilience, airflow, and comfort. In general, the internal liner 32 may be constructed of a thermoplastic elastomer, a foam material of, for example, approximately 1/2 to 1 inch thickness. It may be constructed of expanded polystyrene.

In one preferred embodiment, the internal liner 32 is constructed of a use dependent contouring foam or a pressure equalizing contouring fluid. One type of use dependent contouring foam contemplated with in the scope of the present invention will mold permanently to the user's head, but will do so over a period of time. Another type of this foam takes shape when compressed about a user's head and only changes shape when something causes it to change. The pressure equalizing contouring fluid instantly takes shape of the compressing element and does not rebound, or return to its original form. Rather, it retains the shape of the element until deformed by another compressing element, and will not rebound. Such a contouring fluid, thus, is capable of repeatedly forming a custom mold, and will retain the shape of the last element to which it is exposed. In this embodiment, the fluid may be continued in a bladder and, because it is a fluid it will equalize pressure throughout.

The compressible internal liner 32 is attached to an inner surface of the inner shell layer 28. The method of attachment depends upon the type of materials used (of the inner shell layer 28 and of the internal liner 32).

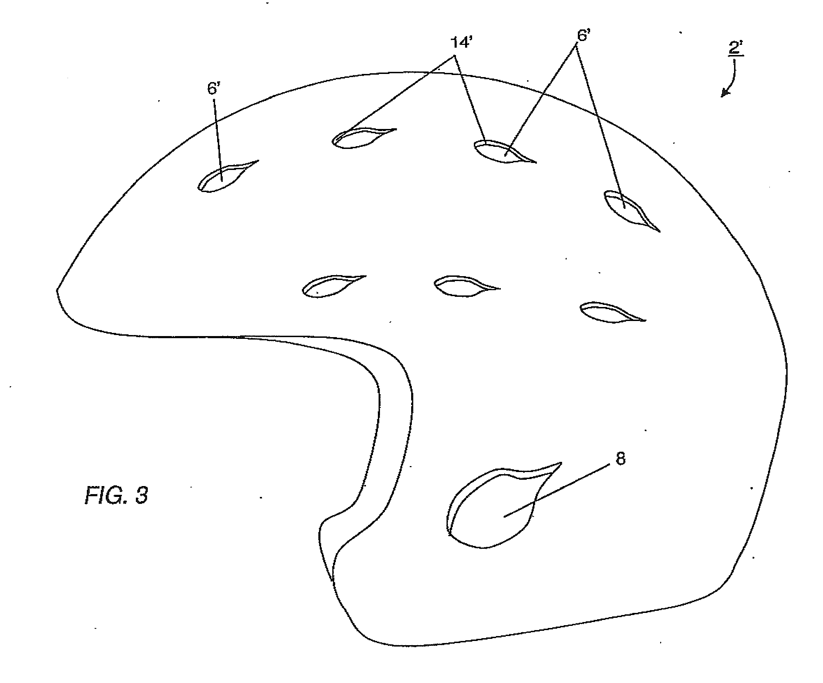

Important to the use of the helmet of the invention is for the helmet to fit properly and to remain in place during the impact. In an embodiment not shown, the helmet extends downwards from the regions near the ears and covers the angle of the wearer's jaw. This extension may be flexible, and when used in conjunction with a chinstrap, may be drawn in tightly to provide a snug fit around the jaw. FIG. 3 shows another embodiment of a helmet 2' constructed in accordance with the invention. Here, the helmet 2' is a football helmet (facemask and chinstrap not shown). This helmet 2' illustrates a design that covers the ears and a portion of the wearer's jaw. The helmet 2' has ventilation openings 6' near the top and on the sides of the helmet 2' and an ear hole 8. Again, for clarity sake, the various layers of materials used in the construction of the helmet 2' appear in each opening 6' as a single layer 14'.

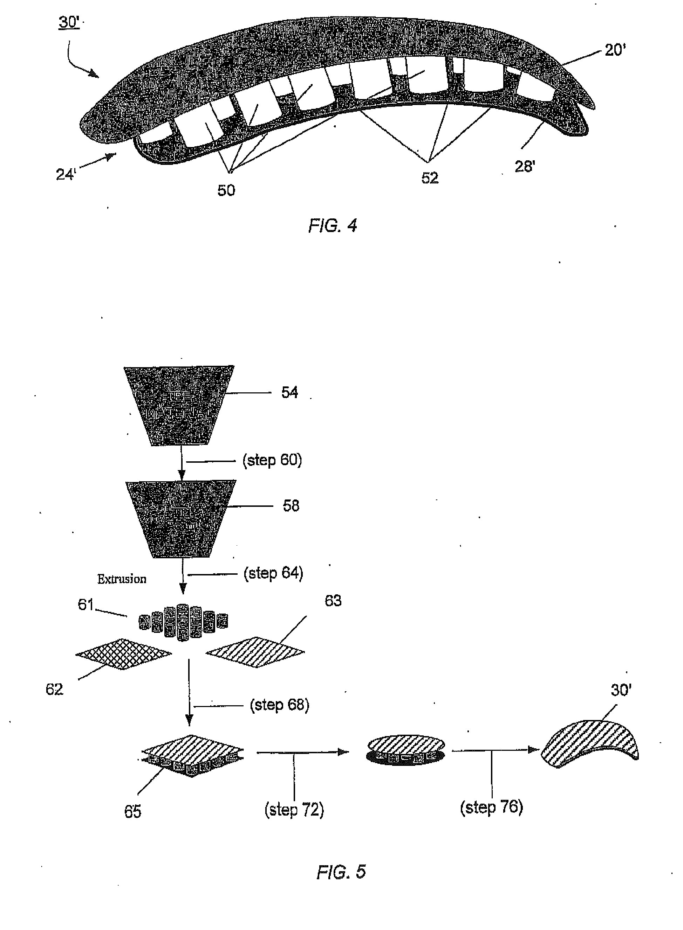

FIG. 4 shows a cross-section of an embodiment of a layered shell 30' for use, for example, in the construction of protective headgear. In this embodiment, the shell 30' has an outer layer 20', an inner layer 28', and a plurality of independent compressible members 50 disposed between the inner and outer layers 28', 20'. Each member 50 attaches to an internally facing surface of the outer layer 20' and to a surface of the inner layer 28' that faces the outer layer 20'. Members 50 are independent in that each individual member 50 can compress or shear independently of the other members 50. Here, members 50 have a resilient, compressible solid or foam construction.

Members 50 can range from approximately one-eighth inch to one inch in height and one-eighth inch to one-half inch in diameter, and need not be of uniform height or diameter. Although shown to have the shape of columns, the members 50 can have a variety of shapes, for example, pyramidal, cubic, rectangular, spherical, disc-shaped, and blob-shaped. Preferably, the members 50 are constructed of TPE material (e.g., solid form, foam), although other types of compressible materials can be used for producing the members 50, without departing from the principles of the invention, provided such materials can make the members sufficiently resilient to respond to various types of impact by leaning, stretching, shearing, and compressing.

In one embodiment, there is a spatial separation between each member 50. Referred to herein as an interstitial region 52, the spacing between the members 50 bounded between the inner and outer layers 28', 20' defines a volume of fluid. As used herein, this fluid is any substance that flows, such as gas and liquid. The distance between adjacent members 50 can be designed so that a desired proportion of the volume of the shell 30' (e.g., > 50%) is comprised of fluid. In a preferred embodiment, the fluid within the interstitial region 52 is air. An air-containing interstitial region 52 provides for lightweight headgear.

In FIG. 4, the distance between the outer layer 20' and the inner layer 28' is exaggerated in order to reveal the members 50 of the middle layer 24'. (The middle layer 24' here comprises the members 50 and interstitial region 52). In general, the outer layer 20' and inner layer 28' approach and may touch each other so that any gap between the layers 20', 28' either is imperceptible or does not exist. Preferably, the outer and inner layers are not directly attached to each other at any point along the shell 30'. Not directly attaching the layers enables the outer layer to move during impact independently of the inner layer in a scalp-like fashion. At one or more points along the edge of the shell where the outer layer approaches the inner layer, an elastic adhesive or another intervening substance or material, can be applied in between the two layers in order to make the layers 20', 28' closely approximate other. This adhesive can be an elastomeric gel (similar to rubber cement) or an adhesive strip that attaches to each layer 20', 28'. Despite this adhesive attachment of the intervening material to each layer 20', 28', the outer layer can still move relative to the inner layer in scalp-like fashion. Gaps may be present in this adhesive at various locations along the edge of the shell to permit air to escape from the middle layer 24' during an impact to the shell or to enter the middle layer 24' when the impact is over, as described in more detail below.

FIG. 5 shows a method for producing the shell 30' for use in constructing protective headgear. According to this method, the compressible members 50 are constructed of TPE material 54. In step 60, a TPE foam 58 is produced from the TPE material 54, as described above. At step 64, the TPE foam 58 is extruded into a desired structure 61, here, for example, columnar members. Initial construction of the compressible members may be in the form of a chain (i.e., a single continuous string of multiple members, analogous to coupling between cars of a train). Alternatively, the compressible members may be formed together as a larger unit, which has an appearance analogous to that of a rake when the TPE structure 61 is laid flat and which takes a hemispherical shape when laid onto the inner layer 28'. Other techniques for forming the members together can be practiced to produce the desired structure 61.

The TPE foam structure 61 is placed (step 68) between and attached to a first sheet 62 of material, to serve as the inner layer 28', and a second sheet 63 of material to serve as the outer layer 20'. The compressible members may be attached to the inner layer 28' one member 50 at a time, for example, by adhesive. Alternately, each member 50 can have a point, nozzle, stem, which can be inserted into an appropriately shaped opening in the inner layer 28' to hold that member in place. In one embodiment, the TPE foam structure 61 has a common chemical component as the sheets 62, 63 for the inner and outer layers, thus enabling chemical adhesion between the TPE foam structure and each layer during the manufacturing process. Thus, secondary adhesives are unnecessary, although not precluded from being used, to attach the TPE foam structure to these layers. The resulting sheet of composite structure 65 can then be cut (step 72) and formed (step 76) into the desired shape of the shell 30' (only a portion of the shell being shown).

Instead of cutting and shaping the inner, middle, and outer layers together, as described above, the manufacture and shaping of each of the three layers of the shell can occur independently, and then the independently formed layers can be adhered to one another. As another embodiment, the middle and inner layers can be shaped together and the outer layer independently; then, the outer layer can be adhered to the middle layer. This embodiment can lead to the modularization of the manufacture of helmets. For instance, the interior components of a helmet, i.e., the liner, inner layer, and middle layer, can have standardized construction (i.e., the same appearance irrespective of the type of sports helmet for which the interior components are to be used), with the outer sport-specific layer, which is adhered to the middle layer, or injection molded around the interior components, providing the customization of the helmet for a particular sport.

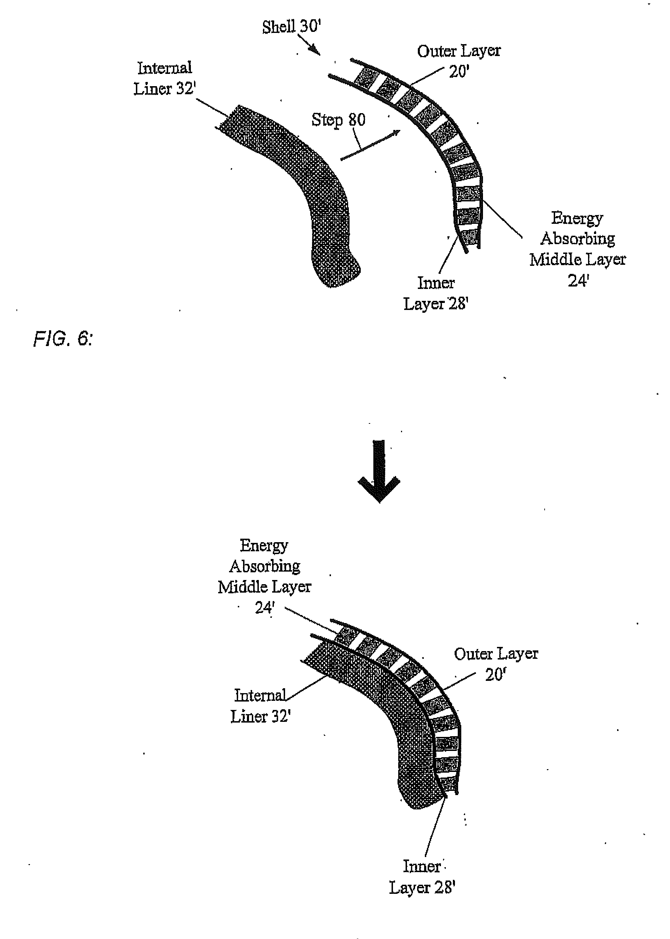

As shown in FIG. 6, a compressible (e.g., foam) internal liner 32' can then be added (step 80) to the multilayer shell 30'. FIG. 6 shows a cross-section of a portion of the shell 30' and of the internal liner 32'. The internal liner 32' is attached (e.g., with an adhesive) to an internally facing surface of the inner layer 28'. The shape of the internal liner 32' conforms to the general shape of the shell 30' and to the shape of a wearer's head.

The shell 30' of the invention may reduce both linear acceleration and rotational acceleration experienced by the head of the headgear wearer. Linear acceleration occurs when the center of gravity of the wearer's head becomes rapidly displaced in a linear direction, such as might occur when the headgear is struck from the side. Rotational acceleration, widely believed to be a primary cause of concussion, can occur when the head rotates rapidly around the center of gravity, such as might occur when the headgear is struck tangentially. Most impacts impart both types of accelerations.

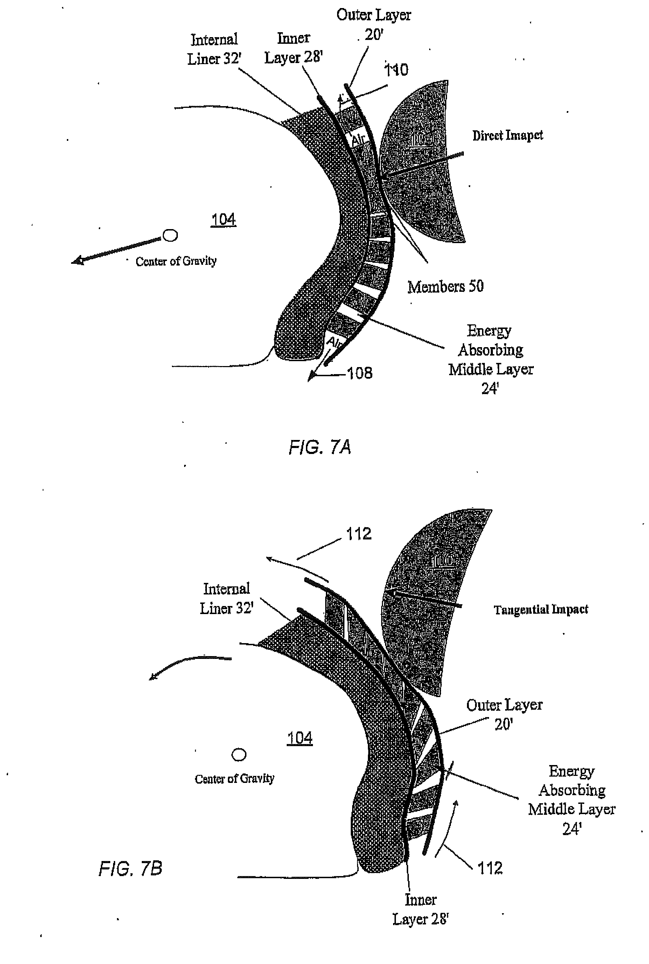

FIG. 7A illustrates an exemplary simulated operation of the shell 30', with solid or foam members 50, undergoing a direct impact from an object 100. In this example, the shell 30' operates to reduce linear acceleration of the headgear wearer's head 104. When the object 100 strikes the outer layer 20', the members 50 directly beneath the outer layer 20' at the point of impact compress. The compression of the shell 30' also causes air to exit the middle layer 24' (arrow 108) through one or more openings at an edge of the shell 30' where the inner and outer layers 28', 20' approach each other. Air also moves through the interstitial region away from the point of impact (arrow 110). The combined effects of energy-absorption by the compressible members 50 and air cushioning by the release and movement of air operate to reduce the amount of energy that reaches the wearer's head 104. When the force of the impact subsides, the shape and resilience of the inner and outer layers 28', 20', operate to restore the shell 30' and the compressed members 50 to their original shape. When returning to the original shape, the shell 30' in effect inhales air through each opening at the edge.

FIG. 7B illustrates an exemplary simulated operation of the shell 30', with solid or foam members 50, undergoing a tangential impact from an object 100. In this example, the shell 30' operates to reduce rotational acceleration of the wearer's head 104. When struck by an object tangentially, the outer layer 20' shears with respect to the inner layer 28' in a direction of motion of the object, as illustrated by arrows 112. The smoothness of the outer layer 20' can operate to reduce friction with the object 100 and, correspondingly, to reduce the rotational force experienced by the shell 30'. Members 50 at the point of impact compress to some extent and shear with the outer layer 20'. As with the example of FIG. 7A, the compression causes air to exit the middle layer 24' and to move within the interstitial region. The combined effects of the shearing motion of the outer layer 20' and members 50, of the energy-absorbing compression of the middle layer 24', and of the release and movement of air operate to reduce the rotational force reaching the wearer's head 104. The shell 30' and members 50 return to their original shape after the force of the impact subsides.

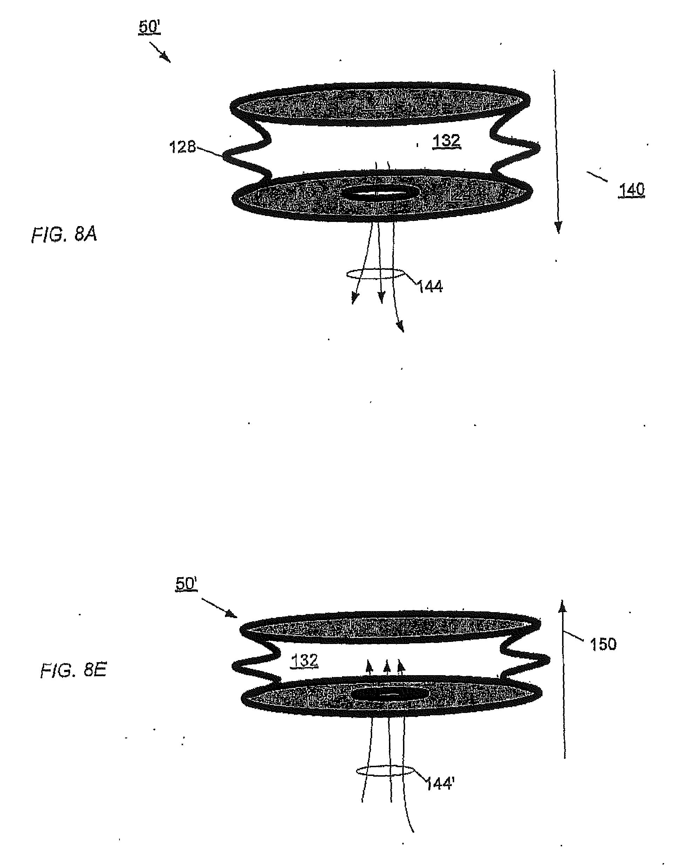

FIG. 8A shows an embodiment of a compressible member 50' for use in constructing the middle layer 24' for the shell 30' in accordance with the invention. Embodiments of the invention can use this type of member 50' in conjunction with or instead of openings at the edge of the shell 30'. Making the member 50' of TPE material further operates to improve the energy-absorbing effect of the shell, although other types of compressible materials can be used for producing the member 50'. The member 50' has a top surface 120, a bottom surface 124, and a sidewall 128 that define a hollow internal chamber 132. The top surface 120 attaches to the outer layer 20' of the shell 74, and the bottom surface 124 attaches to the inner layer 28'. The bottom surface 124 has a small opening 136 formed therein. When the member 50' compresses in the general direction indicated by arrow 140, airflow 144, for example, exits the small opening 136.

The size of the opening 136 is designed to produce a rate-sensitive response to any impact causing compression of the member 50'. For instance, if the application of force upon the member 50' is gradual or of relatively low energy, the opening 136 permits sufficient air to pass through so that the member 50' compresses gradually and presents little resistance against the force. For example, an individual may be able to compress the shell of the protective headgear manually with a moderate touch of a hand or finger, because the energy-absorbing middle layer and, in some embodiments, the outer and inner layers are made of compressible materials. Because the application of the force is gradual, the wearer's head is not likely to accelerate significantly and thus is less likely to experience concussion. In addition, the wearer may feel the air being expelled from the members 50' onto his or her head, as described further below.

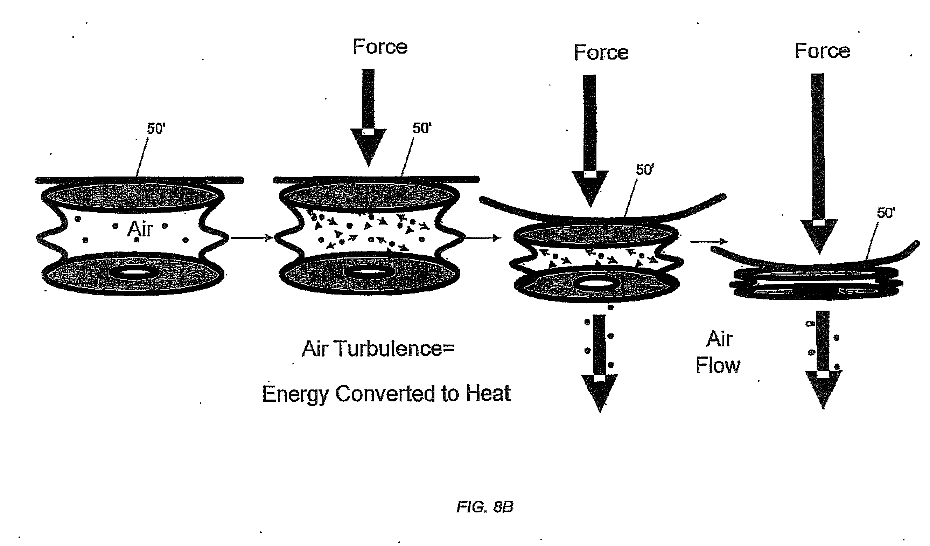

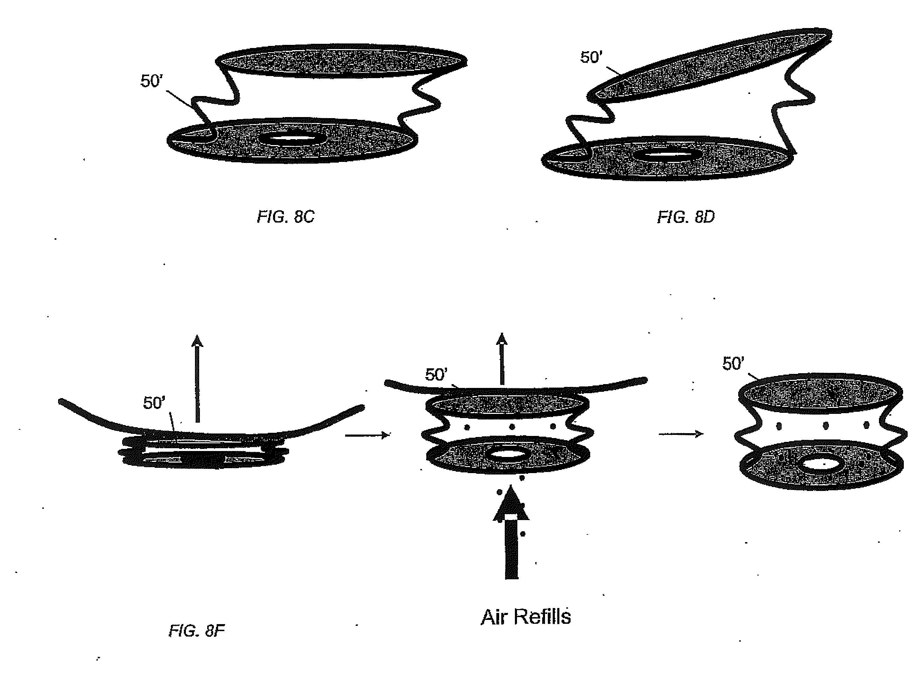

If, as illustrated by FIG. 8B, the application of force upon the member 50' occurs instantaneously or is of relatively high energy, the energy of impact is converted to heat, and laminar or turbulent air flows within the chamber 132. The size of the opening 136, which is small relative to the volume of air moved by the force, restricts the emission of the turbulent or laminar air from the chamber 132 and thus causes resistance within the chamber 132. Eventually the resistance is overcome and air flows out, but during this process, the impact energy is thus converted to heat. This variable response, dependent upon the energy input, is termed a rate-sensitive or a non-linear response. An advantage of this structure is that when the member 50' compresses and empties the entire volume of air, a length of TPE material remains, which further absorbs energy. This helps prevent "bottoming out", i.e., fully compressing so that the cushioning effect of the member 50' is lost and the impinging force transfers directly to the wearer's head. In addition to providing this rate-sensitive response, the member 50' can also stretch and bend during tangential impact similarly to the members 50 described above, as illustrated by FIG. 8C and FIG. 8D.

FIG. 8E shows the embodiment of the compressible member 50' after becoming compressed. Because of its resilient nature, the tendency of the member 50' is to return to its uncompressed shape. The inner and outer layers 28', 20' to which the member 50' is attached also contribute to the restoration of the member 50' to its uncompressed shape. The tendencies of the inner and outer layers 28', 20' to return to their pre-impact shape, because of their semi-rigidness and resiliency, operate to pull the member 50' back to its uncompressed shape. Accordingly, after the force is removed from the shell 30', the member 50' expands in the direction indicated by arrow 150, consequently drawing air in through the opening 136 as indicated by arrows 144'. FIG. 8F illustrates a simulated sequence of expansion of a rate-sensitive compressible member 50', as the force is removed.

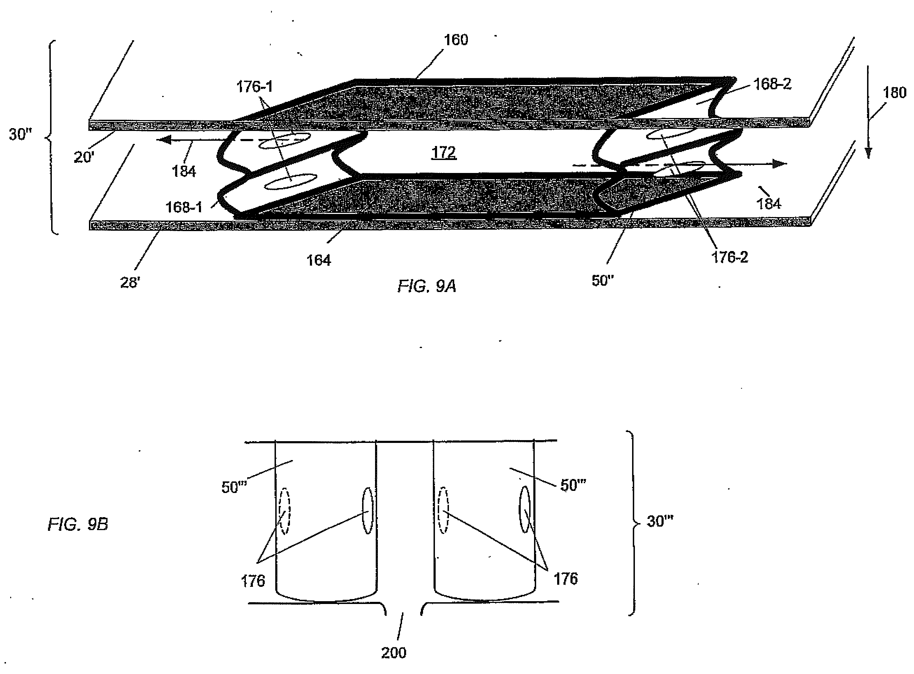

FIG. 9A shows a cross-section of another embodiment of a rate-sensitive compressible member 50" that is generally rectangular in shape (i.e., a strip). The member 50" has atop surface 160, a bottom surface 164, sidewalls 168-1, 168-2 (generally, 168), and a hollow internal chamber 172. The top surface 160 attaches to the internally facing surface of the outer layer 20' of the shell 30", and the bottom surface 164 attaches to a surface of the inner layer 28'. Each sidewall 168 has a respective small opening 176-1, 176-2 (generally, 176) formed therein. (Practice of the invention can be achieved with only one of the sidewalls 168 having an opening). When the member 50" compresses generally in the direction indicated by arrow 180, airflows 184 exit the small openings 176 and pass through the interstitial region of the shell. This embodiment illustrates that a variety of shapes, for example, disc-shaped, cylindrical, and pyramidal, can be used to implement rate-sensitive compressible members of the invention, capable of converting impact energy to heat of turbulent or of laminar airflow.

FIG. 9B shows a cross-section of a shell 30'" having a plurality of rate- sensitive compressible members 50"' disposed between the outer layer 20' and inner layer 28'. Each compressible member 50"' has a plurality of openings 176 for the passage of fluid (i.e., air). The inner layer can have an openings 200 formed therein, to permit the passage of fluid. Fluid escaping the rate-sensitive compressible members 50"' during impact, or returning to the compressible members 50"' after impact, thus have avenues for leaving and entering the shell 30"'. Embodiments of the invention can have one or more of such openings 200 in addition to or instead of openings at the edge of the shell. Further, other embodiments can use such openings 200 with other types of compressible members (e.g., those described in FIG. 4).

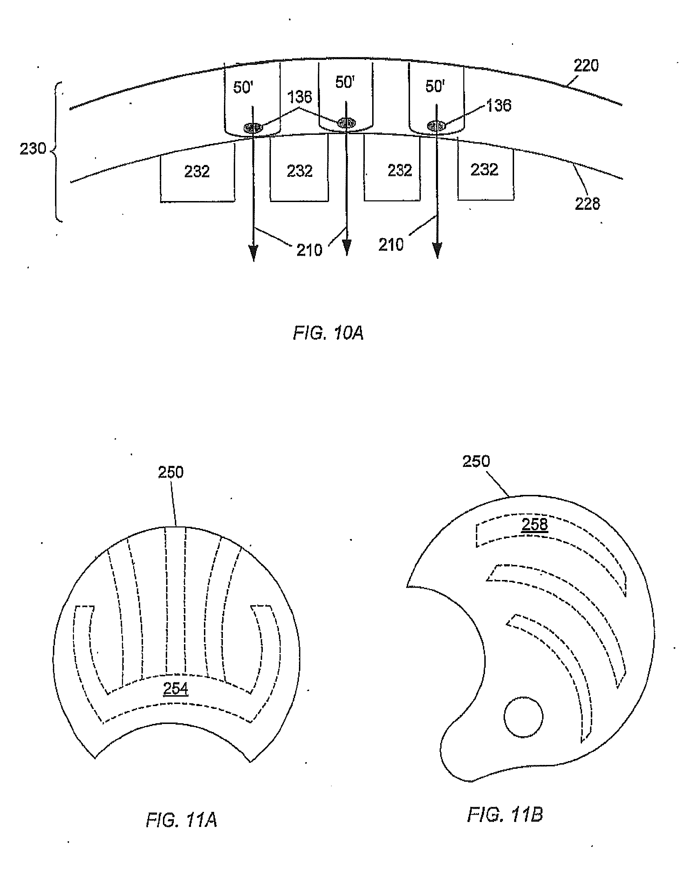

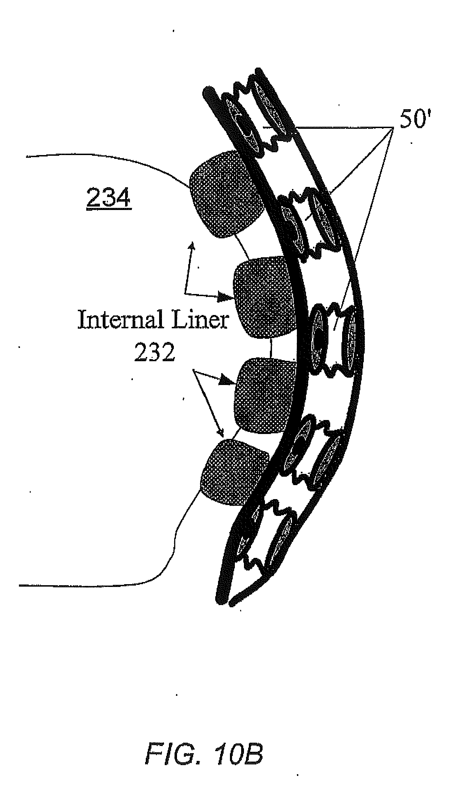

FIG. 10A shows a cross-section of an embodiment of a shell 230 having an outer layer 220, an inner layer 228, and a plurality of the rate-sensitive compressible members 50' (FIG. 8A) disposed therebetween. The opening 136 of each rate- sensitive compressible member 50' aligns with an opening (not shown) in the surface of the inner layer 228 and through any liner 232 so that expelled or inhaled air (arrows 210) can pass into the interior of the protective headgear. Similarly, such openings 136 can be on the sides of the compressible member 50', allowing the release and return of air through the interstitial region of the shell 230. FIG. 10B shows the shell 230, with rate-sensitive compressible members 50' and an internal liner 232, on the head 234 of a user.

FIG. 10C illustrates an exemplary simulated operation of the shell 230, with rate-sensitive members 50', undergoing a direct impact from an object 236. In this example, the shell 230 operates to reduce linear acceleration of the headgear wearer's head 234. When the object 236 strikes the outer layer, the members 50' directly beneath the outer layer at the point of impact compress. The compression of the shell 230 also causes air to exit the members 50' (arrows 238) and enter the interior of the headgear through the openings in the members 50' and in the inner layer.

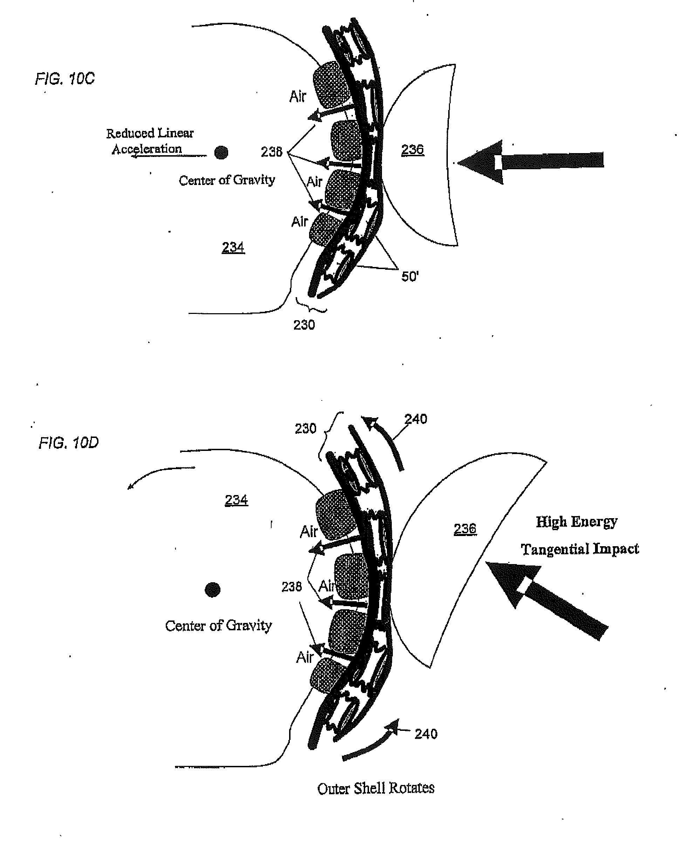

FIG. 10D illustrates an exemplary simulated operation of the shell 230, with rate-sensitive compressible members 50', undergoing a tangential impact from an object 236. In this example, the shell 230 operates to reduce rotational acceleration of the wearer's head 234. When struck by an object tangentially, the outer layer shears with respect to the inner layer in a direction of motion of the object, as illustrated by arrows 240. Members 50' at the point of impact compress to some extent and shear with the outer layer. As with the example of FIG. 10C, the compression causes air to exit the members 50' and to enter the interior of the headgear. The combined effects of the shearing motion of the outer layer and members 50', of the rate-sensitive and energy-absorbing compression of the members 50', and of the release of air into the interior of the headgear operate to reduce the rotational force reaching the wearer's head 104.

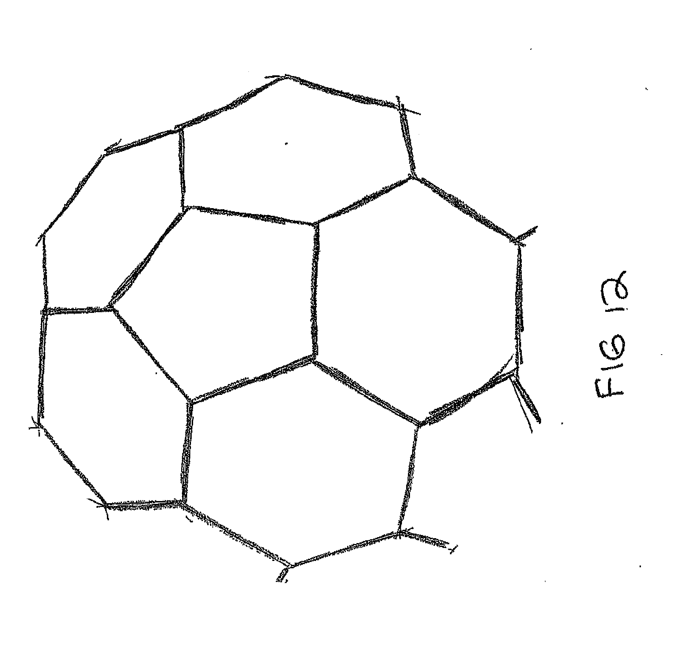

As an illustration of an exemplary use of the invention, FIG.11A shows a rear view of an embodiment of protective headgear 250 embodying the invention. The headgear 250 includes a pattern 254 of strip-shaped members 50" (FIG. 9A) disposed between outer and inner layers of the shell. FIG. 11B shows a side view of the headgear 250 with another pattern 258 of strip-shaped members 50". A variety of other patterns is possible without departing from the principles of the invention.

FIG. 12 illustrates one embodiment of the inner shell layer 28 wherein the liner is non-continuous in form and is provided with a buckeyball shape. In this configuration, the inner liner layer 32 is interspersed with hexagon and pentagon shaped cutouts.

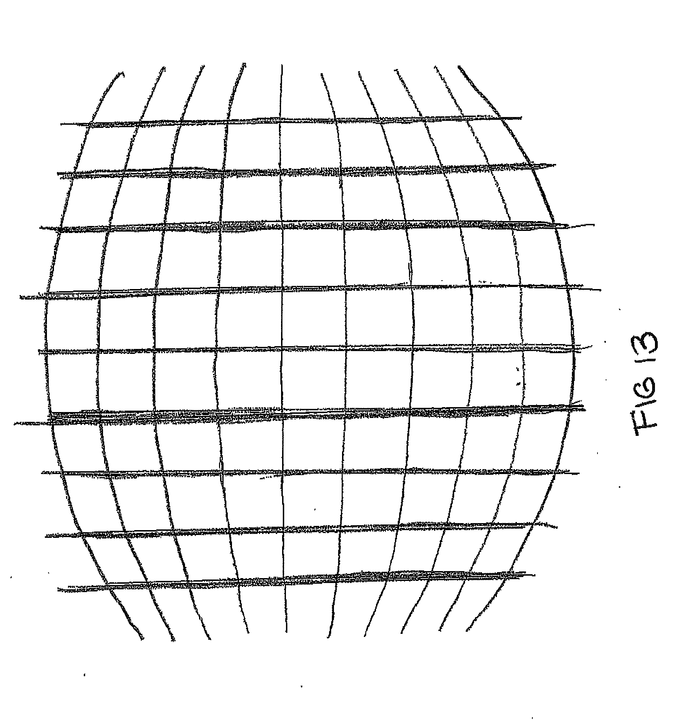

FIG. 13 illustrates another embodiment of the inner shell layer 28 wherein the liner is non-continuous in form and is provided with a grid shape, in which square openings are the prevailing pattern.

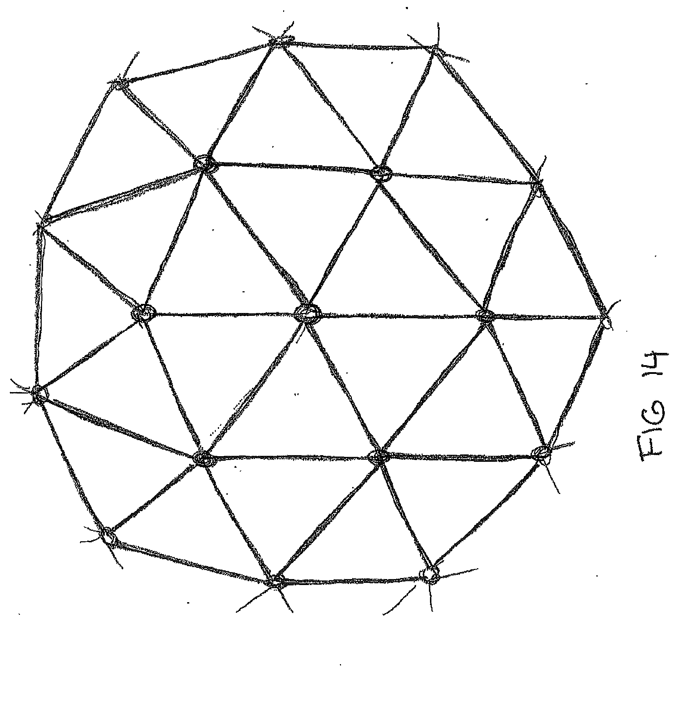

FIG. 14 illustrates a third embodiment of the inner shell layer 28 wherein the liner is provided with a geodesic dome shape having triangular shaped cutouts. Stated another way, in this configuration, the lines of the thermoplastic are formed into triangles which meet at the vertices.

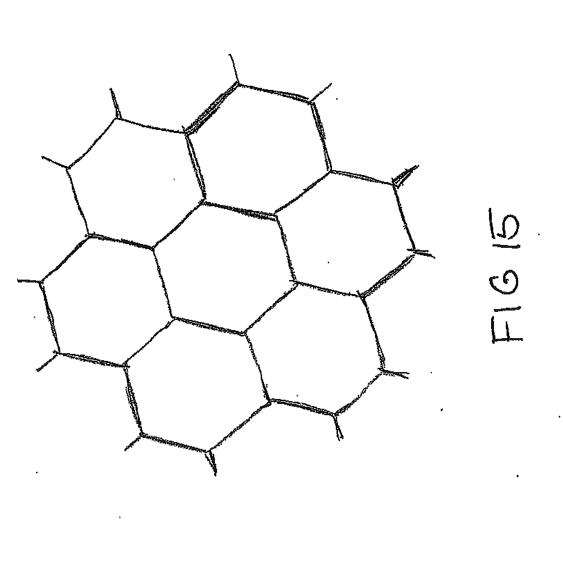

FIG. 15 illustrates a fourth embodiment of the inner shell layer 28 wherein the liner is non-continuous and is provided with a honeycomb, wherein the liner defined hexagonal shapes. Still other examples of inner liner configurations will be recognized by those skilled in the art, including combinations of the described patterns.

While the invention has been shown and described with reference to specific preferred embodiments, it should be understood by those skilled in the art that various changes in form and detail may be made therein without departing from the spirit and scope of the invention as defined by the following claims. For example, more than one type of compressible member can be combined to construct a shell for a protective headgear.

## Claims

1. Impact absorbing protective headgear, comprising
an inner layer;
an outer layer, the inner and outer layers having opposed surfaces; and
a middle layer comprising a plurality of compressible members, the middle layer extending between the inner and outer layers the inner and outer layers being at least partially coextensive so that when the outer layer is impacted, the outer layer de- fleets locally in response to the impact, thereby absorbing at least some of the energy created by the impact, and at least one of the compressible members of the middle layer compresses and shears relative to the inner layer to absorb impact energy not absorbed by the outer layer.

2. The protective headgear of claim 1, wherein the middle layer is anchored in at least one location to the opposed surfaces of the inner layer and the outer layer, the inner and outer layers being at least partially coextensive.

3. The protective headgear of claim 1, further comprising a relatively compressible inner liner layer disposed inwardly of the inner layer.

4. The protective headgear of claim 1, wherein the middle layer has a rebound resilience elasticity of about fifty percent (50%) or less.

5. The protective headgear of claim 4, wherein the middle layer has a rebound resilience elasticity of about twenty-five percent (25%) or less.

6. The protective headgear of claim 1, wherein the plurality of compressible members are disposed in a fluid-containing interstitial region bounded by the outer layer and the inner layer.

7. The protective headgear of claim 1, further comprising at least one passageway by which fluid can leave the middle layer in response to the impact.

8. The protective headgear of claim 7, wherein the at least one passageway includes a gap between the outer layer and the inner layer.

9. The protective headgear of claim 7, wherein the at least one passageway includes at least one opening in the inner layer.

10. The protective headgear of claim 1, wherein at least one of the compressible members has a bellows-like sidewall construction.

11. The protective headgear of claim 1, wherein the at least one opening in the walls of the compressible member is adapted to produce a rate-sensitive response to the force of the impact exerted on the outer layer such that the compressible member compresses with relatively little resistance when the impact is of relatively low energy and such that the compressible member compresses with relatively high resistance when the impact force is of relatively high energy.

12. The protective headgear of claim 1, wherein the middle layer has a honey- comb structure of interconnected cells.

13. The protective headgear of claim 1, wherein the TPE material has a glass-transition temperature less than about minus twenty degrees (-20°) Fahrenheit.

14. The protective headgear of claim 12, wherein the honeycomb-structured middle layer is made of a thermoplastic elastomer (TPE) material.

15. The protective headgear of claim 1, wherein the TPE material has a glass-transition temperature less than about minus twenty degrees (-20°) Fahrenheit.

16. The protective headgear of claim 1, wherein the at least one opening in the compressible member permits fluid to be drawn into the internal chamber thereof as the compressible member resiliently expands in response to mitigation of the force of the impact.

17. The protective headgear of claim 1, wherein the inner layer includes at least one opening in communication with the at least one opening in the compressible member to permit fluid exiting from the compressible member when compressed to pass through the inner layer.

18. The protective headgear of claim 1, wherein the outer layer includes at least one opening in communication with the at least one opening in the compressible member to permit fluid exiting from the compressible member when compressed to pass through the outer layer.

19. The protective headgear of claim 1, further comprising a relatively compressible inner liner layer disposed inwardly of the inner layer and wherein the inner layer and the inner liner layer include at least one opening in communication with the at least one opening in the compressible member to permit fluid exiting from the compressible member when compressed to pass through the inner layer and the inner liner layer.

20. The protective headgear of claim 1, wherein the compressible members are independent of one another.

21. The protective headgear of claim 1, wherein the compressible members are interconnected.

22. The protective headgear of claim 1, wherein the inner layer is non- continuous in shape.

23. The protective headgear of claim 22, wherein the inner layer has a buckey ball-like shape.

24. The protective headgear of claim 22, wherein the inner layer has a grid-like shape.

25. The protective headgear of claim 22, wherein the inner layer has a geodesic dome-like shape.

26. The protective headgear of claim 25, wherein the inner layer has a honey- comb-like shape.
